# DEMANDE DE BREVET EUROPEEN

(11) **EP 4 357 658 A1**
(43) Date de publication de la demande: **24.04.2024**
(21) Numéro de dépôt: 23202701.1
(22) Date de dépôt: 10.10.2023
(51) Int. Cl.: F16L 57/04, H01M 10/613, H01M 10/625, F16L 59/11, F16L 59/14

(54) **DISPOSITIF DE PROTECTION THERMIQUE POUR CONNECTEUR À COUPLAGE RAPIDE**

(30) Priorité: 18.10.2022 FR 2210733
(71) Demandeur: AKWEL, 01410 Champfromier (FR)
(72) Inventeur: CARLE, Alexandra, 84700 SORGUES (FR); DREUX, Jérémy, 84190 BEAUMES DE VENISE (FR)
(74) Mandataire: Martin, Marie-Aude

(57) **Abrégé**

Le dispositif (30) de protection thermique, en particulier d'un circuit de régulation thermique d'un pack batterie pour un véhicule automobile, comprend un capot (30) comprenant une paroi (32) pourvue, selon un axe longitudinal, d'une portion arrière (P1) adaptée pour être montée sur le connecteur (100) de façon à l'entourer au moins partiellement et d'une portion avant (P2) adaptée pour être montée sur l'élément tubulaire (20) et pour le maintenir par une liaison mécanique.

## Description

La présente invention se rapporte principalement au raccordement de deux éléments entre eux, notamment pour le raccordement à couplage rapide de conduites tubulaires d'un circuit de circulation d'un fluide pour un organe d'un véhicule automobile. Plus particulièrement mais non exclusivement, l'invention s'applique au raccordement de conduites tubulaires pour un circuit de régulation thermique d'un « pack batterie » pour un véhicule automobile électrique comprenant un moteur électrique alimenté électriquement par le « pack batterie ».

La lutte contre la pollution atmosphérique a conduit les constructeurs automobiles à développer des véhicules à plus faible consommation de carburant, voire des véhicules dépourvus de moteurs à combustion interne. Ainsi, un nombre croissant de véhicules de série comportent un moteur électrique, soit comme unique moyen d'entraînement pour équiper des véhicules électriques, soit en association avec un moteur à combustion interne pour équiper des véhicules hybrides.

De tels véhicules nécessitent une batterie comprenant des accumulateurs électrochimiques, désignés également par cellules ou éléments de batterie, ce qui permet de réaliser le stockage d'une importante quantité d'énergie électrique en vue d'alimenter leur moteur électrique.

De par leur tension élevée et leur forte densité d'énergie, les accumulateurs électrochimiques de type par exemple Lithium-ion (Li-ion) sont particulièrement adaptés pour alimenter la chaîne de traction d'un véhicule électrique ou hybride. Dans un tel accumulateur, une cellule Li-ion est un composant élémentaire, qui renferme une certaine quantité d'électrolyte, à travers lequel peuvent migrer des ions de lithium entre une cathode et une anode, afin de stocker ou de délivrer de l'énergie électrique.

Dans un accumulateur Li-ion, une pluralité de cellules Li-ion sont d'abord assemblées et connectées en série et/ou en parallèle pour former un module, puis une pluralité de modules sont assemblés et connectés en série et/ou en parallèle pour former un « pack » selon la terminologie anglo-saxonne. Ainsi, un « pack » de batterie comporte en général plusieurs modules connectés entre eux, eux-mêmes constitués de plusieurs cellules connectées entre elles et une structure de support de ses différents éléments.

Le« pack » comporte généralement de nombreux circuits de fluide, notamment pour la régulation thermique des éléments de batterie. Ces circuits comportent des éléments tubulaires devant être interconnectés de façon rapide, en particulier avec des raccords rapides ou connecteurs à couplage rapide (connus sous la terminologie anglo-saxonne « quick connector ») tout en permettant de garantir l'étanchéité de ces circuits de fluide.

Dans le cas d'une défaillance d'une ou plusieurs cellules dans un « pack » de la batterie, un phénomène d'emballement thermique peut survenir à l'intérieur des cellules. Ce phénomène d'emballement thermique peut s'étendre à tout le « pack » et entraîner un incendie dès lors que les cellules franchissent un seuil de température critique. S'agissant d'un feu d'origine chimique, il est très difficile à éteindre, surtout si l'on considère qu'il est confiné dans l'enceinte quasiment close hermétiquement formée par le « pack. »

Il est par conséquent nécessaire de garantir que les circuits de régulation thermique du « pack » puissent être préservés le plus longtemps possible de dégradations et d'endommagements liés à l'exposition à des températures extrêmes lors par exemple d'un début d'incendie dans le « pack ».

Le but de l'invention est de proposer une solution simple, fiable et peu coûteuse pour résoudre ce problème technique.

### Description de l'invention

A cet effet, l'invention a pour objet un dispositif de protection thermique pour un connecteur à couplage rapide avec au moins un élément tubulaire, en particulier d'un circuit de régulation thermique d'un pack batterie pour un véhicule automobile, comprenant un capot comprenant une paroi pourvue, selon un axe longitudinal, d'une première portion adaptée pour être montée sur le connecteur de façon à l'entourer au moins partiellement et d'une deuxième portion adaptée pour être montée sur l'élément tubulaire et pour le maintenir par une liaison mécanique, caractérisé en ce que à l'état monté, la distance séparant la paroi du capot et le connecteur et/ou l'élément tubulaire est non nulle afin de créer une lame d'air d'entretoisement et en ce que la deuxième portion supporte intérieurement un organe de clipsage adapté pour être monté sur l'élément tubulaire et pour le maintenir par une liaison mécanique de clipsage.

Le dispositif selon l'invention peut en outre comporter l'une ou plusieurs des caractéristiques suivantes.

Selon un mode de réalisation préféré de l'invention, à l'état monté, la distance séparant la paroi du capot du connecteur et/ou de l'élément tubulaire est non nulle afin de créer une lame d'air d'entretoisement.

Selon un mode de réalisation préféré de l'invention, la paroi du capot a, selon une section transversale, une forme générale de U ouvert vers le bas.

Selon un mode de réalisation préféré de l'invention, la deuxième portion supporte intérieurement un organe de clipsage adapté pour être monté sur l'élément tubulaire et pour le maintenir par une liaison mécanique de clipsage.

Selon un mode de réalisation préféré de l'invention, l'organe de clipsage est venu de matière avec la paroi du capot.

Selon un mode de réalisation préféré de l'invention, l'organe de clipsage a une forme générale de pince.

Selon un mode de réalisation préféré de l'invention, l'organe de clipsage s'étend intérieurement à distance d'entretoisement de la paroi du capot.

Selon un mode de réalisation préféré de l'invention, l'organe de clipsage comprend une pince en forme générale de « oméga » avec une partie sommitale se prolongeant vers le bas par deux branches de pince et est relié par un pont de matière par sa partie sommitale à la paroi du capot.

Selon un mode de réalisation préféré de l'invention, l'organe de clispage est obtenu par pliage d'une bande de matière s'étendant longitudinalement à partir d'un bord de la paroi de capot, la bande de matière délimitant une partie proximale configurée pour former le pont de matière et une partie distale configurée pour former l'organe de clipsage, la bande étant pliée en deux dans la partie proximale de façon à amener la partie distale en vis-à-vis d'une surface intérieure de la paroi du capot et la partie distale étant pliée à la manière d'une pince.

Selon un mode de réalisation préféré de l'invention, le capot est réalisé dans un matériau comprenant essentiellement de l'acier inoxydable ou de l'acier traité en surface.

Selon un mode de réalisation préféré de l'invention, le capot est configuré pour être moulé d'une pièce par injection d'une matière plastique.

Selon un mode de réalisation préféré de l'invention, le capot est réalisé dans une matière plastique thermodurcissable comprenant un composant de renforcement consistant en des fibres et/ou billes et/ou poudres de verre, de carbonate de calcium, de mica et/ou de talc.

Selon un mode de réalisation préféré de l'invention, la première portion du capot est dotée intérieurement de pattes de calage du connecteur à l'intérieur du capot.

Selon un mode de réalisation préféré de l'invention, les pattes de calage s'étendent à distance d'entretoisement par rapport à une surface interne de la paroi du capot.

Selon un mode de réalisation préféré de l'invention, chaque patte de calage est formée par un rabat d'une bande de matière s'étendant à partir d'un bord de la paroi de capot vers l'intérieur du capot.

L'invention a encore pour objet un ensemble comprenant un connecteur à couplage rapide, un élément tubulaire pourvu d'un embout coopérant avec un embout complémentaire du connecteur, caractérisé en ce que l'ensemble comprend en outre un dispositif de protection thermique selon l'invention.

Selon un mode de réalisation préféré de l'invention, l'élément tubulaire comprend une gaine de protection thermique, par exemple réalisée par superposition d'une couche de fibres de verre et d'une couche de silicone.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] La figure 1 est une vue en perspective d'un ensemble de raccordement comprenant un capot thermique selon l'invention.
[Fig. 2] La figure 2 est une vue de dessous de l'ensemble de raccordement de la figure 1.
[Fig. 3] La figure 3 est une vue en coupe longitudinale de l'ensemble de la figure 1.
[Fig. 4] La figure 4 est une vue en perspective du capot de protection thermique.
[Fig. 5] La figure 5 est une vue en perspective du capot de la figure 4 selon un autre point de vue.
[Fig. 6] La figure 6 est une vue de dessous du capot de la figure 1.

### Description détaillée de l'invention

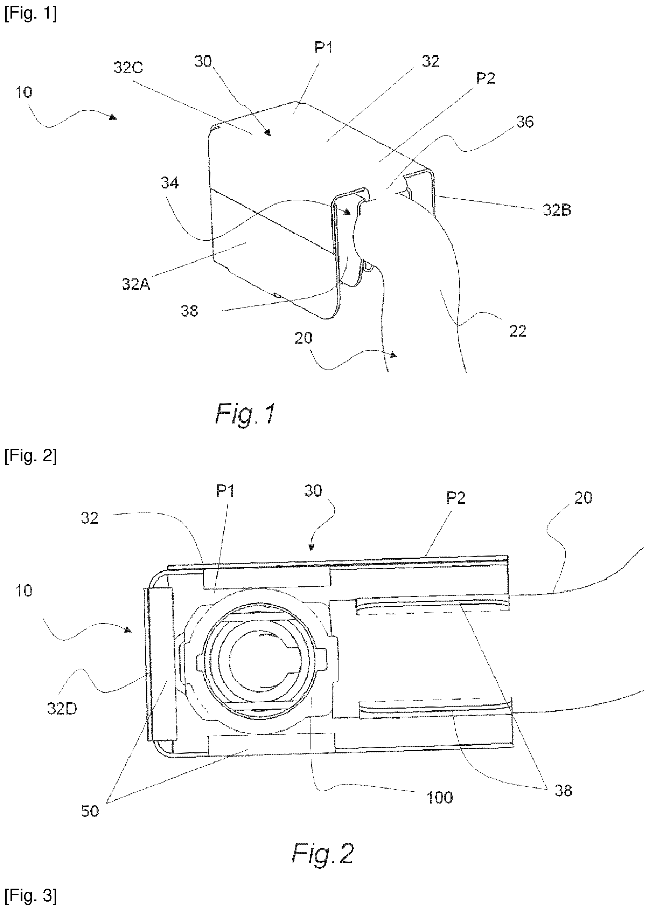

On a représenté sur les figures 1 à 6 un ensemble, pour un circuit de circulation d'un fluide, comprenant un connecteur à couplage rapide et un élément tubulaire pourvu d'un embout coopérant avec un embout complémentaire du connecteur. Dans la suite de la description, on désignera cet ensemble par la référence générale 10.

Dans l'exemple illustré par les figures, le connecteur à couplage rapide porte la référence 100 et l'élément tubulaire porte la référence 20.

Dans l'exemple illustré, comme cela est visible sur la figure 3, le connecteur 100 comprend un corps présentant à une première extrémité 102 un raccord femelle à douille configuré pour recevoir un élément de conduite fluidique mâle (non représenté) et est pourvu à une deuxième extrémité 104 d'un embout mâle de raccordement à un autre élément de conduite fluidique tel que l'élément tubulaire 20 formé par un tuyau flexible. Dans l'exemple illustré, l'embout mâle 104 comprend une surface externe conformée pour l'emmanchement du tuyau flexible 20 et comprend, sur cette surface externe, des moyens de retenue axiale du tuyau flexible 20. Par exemple, on voit sur la figure 3 que l'embout mâle 104 présente un relief étagé du type à cran sapin destiné à recevoir le tuyau flexible 20 par emmanchement. Dans cet exemple illustré, l'embout mâle 104 s'étend selon un axe principal formant un angle de déflexion avec un axe principal le long duquel s'étend le raccord femelle à douille 102. Par exemple, l'angle est un angle droit ou encore dans une variante non illustrée un angle nul.

Cette invention s'applique plus particulièrement mais non exclusivement au domaine technique de la régulation thermique d'un pack batterie d'un véhicule automobile. Dans le mode de réalisation préféré de l'invention, l'ensemble 10 comprenant l'élément tubulaire 20 et le connecteur 100 fait partie d'un circuit de régulation thermique du pack batterie.

Plus particulièrement, selon l'invention, afin de protéger thermiquement le circuit de régulation thermique du véhicule automobile, l'ensemble 10 comprend en outre un dispositif 30 de protection thermique.

En particulier, le dispositif 30 comprend un capot comprenant une paroi 32 pourvue, selon un axe longitudinal, d'une première portion à l'arrière P1 adaptée pour être montée sur le connecteur 100 de façon à l'entourer au moins partiellement et d'une deuxième portion à l'avant P2 adaptée pour être montée sur l'élément tubulaire 20 et pour le maintenir par une liaison mécanique.

Dans une variante non illustrée sur les figures, le connecteur 100 peut être un connecteur en forme de T et le capot 30 peut comprendre dans ce cas une première portion centrale P1' adaptée pour être montée sur le connecteur 100 et des deuxième et troisième portions latérales P2' adaptées pour être montée sur chacun des éléments tubulaires 20 raccordées chacun à une branche du connecteur 100.

Comme cela est visible sur les figures 1 à 6, la paroi 32 du capot 30 a, selon une section transversale, une forme générale de U ouvert vers le bas. Dans le mode de réalisation préféré de l'invention, la paroi 32 comprend une paroi de couvercle 32C et deux parois latérales 32A et 32B.

En outre, dans le mode de réalisation préféré de l'invention, de préférence, la paroi 32 comprend encore une paroi dorsale 32D fermant le capot 32 à l'arrière. Grâce à cette paroi dorsale 32D, le connecteur 100 est protégé thermiquement sur toute une périphérie.

De préférence, à l'état monté, la distance séparant la paroi 32 du capot 30 et le connecteur 100 et/ou l'élément tubulaire 20 est non nulle afin de créer une lame d'air d'entretoisement. Cette lame d'air permet d'isoler thermiquement le connecteur 100 et/ou l'élément tubulaire 20 permettant alors de ralentir la propagation de la température extérieure à la surface du connecteur 100 ou dà la surface de l'élément tubulaire 20

Dans le mode de réalisation préféré de l'invention, la portion avant P2 supporte intérieurement un organe de clipsage 34 adapté pour être monté sur l'élément tubulaire 20 et pour le maintenir par une liaison mécanique de clipsage.

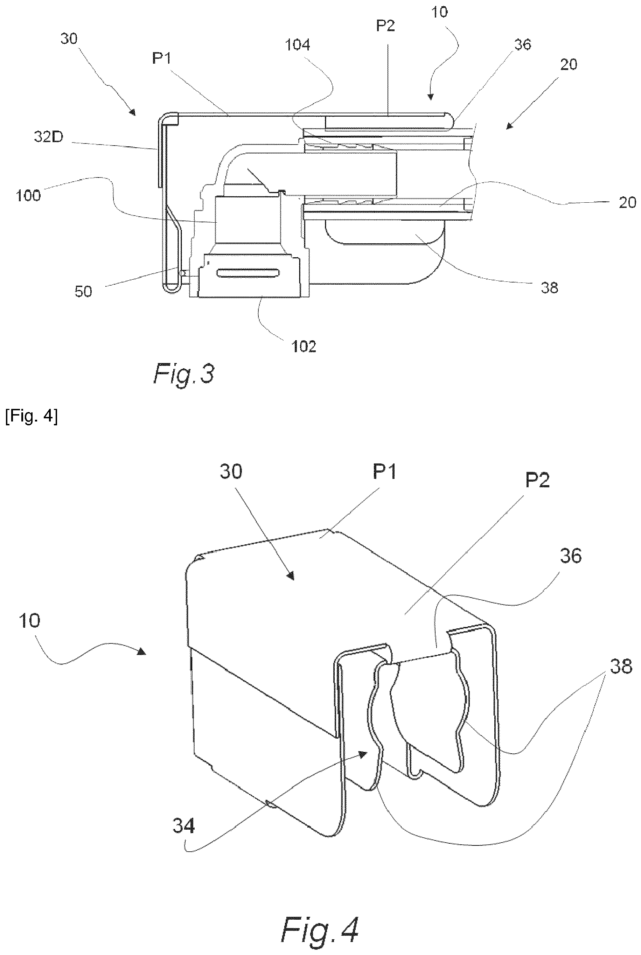

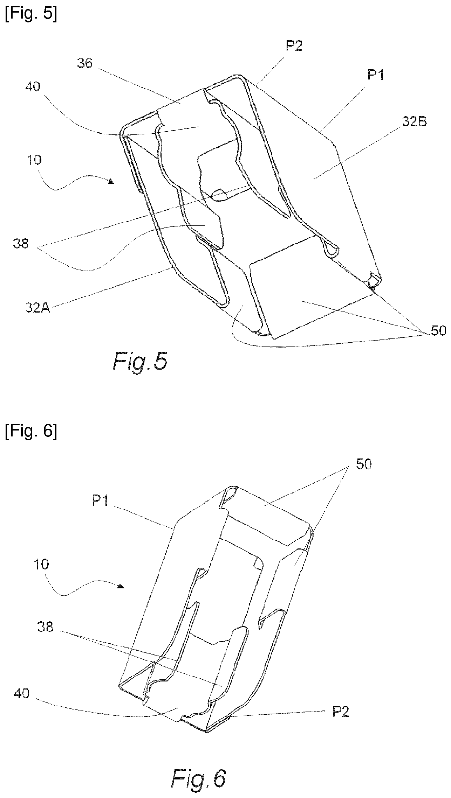

Comme cela est visible sur les figures 4 et 5, l'organe de clipsage 34 a une forme générale de pince. De préférence, afin d'assurer une relative isolation thermique de l'organe 34 et de la paroi 32 du capot 30, l'organe de clipsage 34 s'étend intérieurement à distance de la paroi 32 du capot 30. Cette distance d'entretoisement formée entre la paroi 32 et l'organe de clipsage 34 présente l'avantage de créer un espace d'air, isolant thermique, qui va de fait limiter la propagation de la chaleur de la paroi 32 vers l'organe de clipsage 34 et donc vers l'élément tubulaire 20.

Dans l'exemple illustré, l'organe de clipsage 34 est venu de matière avec la paroi du capot 32. Par exemple, l'organe de clipsage 34 comprend une pince ayant une section transversale en forme générale de « oméga » ou de « C » avec une partie sommitale 40 se prolongeant vers le bas par deux branches 38 de pince et est relié par un pont de matière 36 par sa partie sommitale 40 à la paroi 32 du capot 30.

De préférence, le capot 30 est réalisé dans une matière métallique. Par exemple, le capot 30 est réalisé dans un matériau comprenant essentiellement de l'acier inoxydable ou encore de l'acier traité en surface. Dans l'exemple décrit, l'organe de clispage 34 est ainsi obtenu par pliage d'une bande de matière s'étendant longitudinalement à partir d'un bord de la paroi 32 de capot 30, la bande de matière délimitant une partie proximale configurée pour former le pont de matière 36 et une partie distale configurée pour former l'organe de clipsage 34, la bande étant pliée en deux dans la partie proximale de façon à amener la partie distale en vis-à-vis d'une surface intérieure de la paroi 32 du capot 30 et la partie distale étant courbée en deux pour former les branches de pince 38.

En outre, de préférence, la portion arrière P1 du capot 30 est dotée intérieurement de pattes 50 de calage du connecteur 20 à l'intérieur du capot 30. Par exemple, les pattes de calage 50 s'étendent à distance d'une surface interne de la paroi 32 du capot 30. Cette distance d'entretoisement formée entre la paroi 32 et le rabat 50 présente l'avantage de créer un espace d'air, isolant thermique, qui va de fait limiter la propagation de la chaleur de la paroi 32 vers le rabat 50 et donc vers le connecteur 100.

Dans le mode de réalisation préféré de l'invention, chaque patte de calage 50 est par exemple formée par un rabat, vers l'intérieur du capot 30, d'une bande de matière s'étendant à partir d'un bord de la paroi 32 de capot 30.

Dans une variante non illustrée de l'invention, le capot 30 est réalisé dans un matériau thermodurcissable comprenant un composant de renforcement consistant en des fibres et/ou billes et/ou poudres de verre, de carbonate de calcium, de mica et/ou de talc. Dans ce cas, par exemple, le capot 30 est réalisé pour être moulé d'une pièce par injection d'une matière plastique.

De préférence, l'élément tubulaire 20 comprend encore une gaine de protection thermique, par exemple comprend une gaine de protection thermique, par exemple réalisée par superposition d'une couche de fibre de verre et d'une couche de silicone.

On va maintenant décrire les principaux aspects de fonctionnement d'un ensemble selon l'invention en référence aux figures 1 à 6.

L'ensemble 10 comprend le connecteur à couplage rapide 100, l'élément tubulaire 20, en forme de tuyau flexible pourvu d'un embout qui est adapté pour coopérer avec un embout complémentaire 104 du connecteur 100.

Initialement, l'élément tubulaire 20 est recouvert d'une gaine de protection thermique. Le connecteur 100 et l'élément tubulaire 20 sont ainsi raccordés l'un avec l'autre, par exemple par emmanchement de l'extrémité en cran sapin 104 du connecteur 100 à l'intérieur du tuyau flexible 20 formé par l'élément tubulaire 20.

Ensuite, le dispositif de protection thermique ou capot 30 est monté sur l'ensemble 10 comprenant l'élément tubulaire 20 et le connecteur 100. La portion arrière P1 est assemblée autour du connecteur 100 et la portion avant P2 est montée sur le tuyau flexible 20, de préférence par clipsage grâce à l'organe 34.

Le capot 30 fait alors office d'écran thermique qui empêche alors un endommagement trop rapide de l'ensemble 10 en cas d'exposition à des températures extrêmes.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Dispositif (30) de protection thermique pour un connecteur (100) à couplage rapide avec au moins un élément tubulaire (20), en particulier d'un circuit de régulation thermique d'un pack batterie pour un véhicule automobile, comprenant un capot (30) comprenant une paroi (32) pourvue, selon un axe longitudinal, d'une première portion (P1) adaptée pour être montée sur le connecteur (100) de façon à l'entourer au moins partiellement et d'une deuxième portion (P2) adaptée pour être montée sur l'élément tubulaire (20) et pour le maintenir par une liaison mécanique, **caractérisé en ce que** à l'état monté, la distance séparant la paroi (32) du capot (30) et le connecteur (100) et/ou l'élément tubulaire (20) est non nulle afin de créer une lame d'air d'entretoisement et **en ce que** la deuxième portion (P2) supporte intérieurement un organe de clipsage (34) adapté pour être monté sur l'élément tubulaire (20) et pour le maintenir par une liaison mécanique de clipsage.

2. Dispositif (30) selon la revendication, dans lequel la paroi (32) du capot (30) a, selon une section transversale, une forme générale de U ouvert vers le bas.

3. Dispositif (30) selon l'une quelconque des revendications précédentes, dans lequel l'organe de clipsage (34) est venu de matière avec la paroi (32) du capot (30).

4. Dispositif (30) selon l'une quelconque des revendications précédentes, dans lequel l'organe de clipsage (34) a une forme générale de pince.

5. Dispositif (30) selon l'une quelconque des revendications précédentes, dans lequel l'organe de clipsage (34) s'étend intérieurement à distance d'entretoisement de la paroi (32) du capot (30).

6. Dispositif selon l'une quelconque des revendications précédentes, dans lequel l'organe de clipsage (34) comprend une pince en forme générale de « oméga » avec une partie sommitale (40) se prolongeant vers le bas par deux branches (38) de pince et est relié par un pont de matière (36) par sa partie sommitale (40) à la paroi (32) du capot (30).

7. Dispositif (30) selon la revendication précédente, dans lequel l'organe de clispage (34) est obtenu par pliage d'une bande de matière s'étendant longitudinalement à partir d'un bord de la paroi (32) de capot (30), la bande de matière délimitant une partie proximale configurée pour former le pont de matière (36) et une partie distale configurée pour former l'organe de clispage (34), la bande étant pliée en deux dans la partie proximale de façon à amener la partie distale en vis-à-vis d'une surface intérieure de la paroi (32) du capot (30) et la partie distale étant pliée à la manière d'une pince.

8. Dispositif (30) selon l'une quelconque des revendications précédentes, dans lequel le capot (30) est réalisé dans un matériau comprenant essentiellement de l'acier inoxydable ou de l'acier traité en surface.

9. Dispositif (30) selon l'une quelconque des revendications 1 à 6, dans lequel le capot (30) est moulé d'une pièce par injection d'une matière plastique.

10. Dispositif selon la revendication précédente, dans lequel le capot (30) est réalisé dans une matière plastique thermodurcissable comprenant un composant de renforcement consistant en des fibres et/ou billes et/ou poudres de verre, de carbonate de calcium, de mica et/ou de talc.

11. Dispositif (30) selon l'une quelconque des revendications précédentes, dans lequel la première portion (P1) du capot (30) est dotée intérieurement de pattes de calage (50) du connecteur (100) à l'intérieur du capot (30).

12. Dispositif (30) selon la revendication précédente, dans lequel les pattes de calage (50) s'étendent à distance d'entretoisement par rapport à une surface interne de la paroi (32) du capot (30).

13. Dispositif (30) selon la revendication 11 ou 12, dans lequel chaque patte de calage (50) est formée par un rabat d'une bande de matière s'étendant à partir d'un bord de la paroi (32) de capot (30) vers l'intérieur du capot (30).

14. Ensemble (10) comprenant un connecteur (100) à couplage rapide, un élément tubulaire (20) pourvu d'un embout coopérant avec un embout complémentaire du connecteur (100), **caractérisé en ce que** l'ensemble (10) comprend en outre un dispositif de protection thermique (30) selon l'une quelconque des revendications précédentes.

15. Ensemble (10) selon la revendication précédente, dans lequel l'élément tubulaire (20) comprend une gaine de protection thermique, par exemple réalisée par superposition d'une couche de fibres de verre et d'une couche de silicone.
